Europäisches Patentamt

European Patent Office

Office européen des brevets

(11) Veröffentlichungsnummer: **0 657 482 A1**

(12) **EUROPÄISCHE PATENTANMELDUNG**

(21) Anmeldenummer: 94118846.8

(22) Anmeldetag: 30.11.94

(51) Int. Cl.[6]: **C08G 18/28**, C08G 18/76

(30) Priorität: 09.12.93 DE 4341973

(43) Veröffentlichungstag der Anmeldung:
14.06.95 Patentblatt 95/24

(84) Benannte Vertragsstaaten:
AT BE CH DE DK ES FR GB IT LI NL PT SE

(71) Anmelder: **BASF AKTIENGESELLSCHAFT**

**D-67056 Ludwigshafen (DE)**

(72) Erfinder: **Swoboda, Johann, Dr.**
**Neuwiesenstrasse 28**
**D-67063 Ludwigshafen (DE)**
Erfinder: **Volkert, Otto, Dr.**
**Im Eiertal 10**
**D-67273 Weisenheim (DE)**

(54) **Verfahren zur Herstellung von kompakten oder zelligen Polyurethanen, hierfür verwendbare Urethangruppen enthaltende Polyisocyanatzusammensetzungen und deren Verwendung.**

(57) Gegenstände der Erfindung sind ein Verfahren zur Herstellung von kompakten oder zelligen Polyurethanen durch Umsetzung von höhermolekularen Polyhydroxylverbindungen und gegebenenfalls Kettenverlängerungs- und/oder Vernetzungsmitteln mit einer flüssigen, Urethangruppen enthaltenden Polyisocyanatzusammensetzung, erhältlich aus Mischungen aus Diphenylmethan-diisocyanaten und Polyphenyl-polymethylen-polyisocyanaten und linearen, verzweigtkettigen oder cyclischen, gesättigten oder olefinisch ungesättigten, niedermolekularen Monoalkoholen, die hierfür verwendbaren flüssigen, Urethangruppen enthaltenden Polyisocyanatzusammensetzungen und deren Verwendung zur Herstellung von vorzugsweise hochvernetzten Polyurethanen, insbesondere PU-Hart(form)schaumstoffen.

Gegenstände der Erfindung sind ein Verfahren zur Herstellung von kompakten und vorzugsweise zelligen Polyurethanen, insbesondere Polyurethan(PU)-Hartschaumstoffen, durch Umsetzung von höhermolekularen Polyhydroxylverbindungen (a) und gegebenenfalls Kettenverlängerungs- und/oder Vernetzungsmitteln (c) mit einer flüssigen, Urethangruppen gebunden enthaltenden Polyisocyanatzusammensetzung (b), die ihrerseits erhältlich ist durch Umsetzung von Mischungen aus Diphenylmethan-diisocyanaten (MDI) und Polyphenylpolymethylen-polyisocyanaten, sogenanntem Roh-MDI, und linearen, verzweigten oder cyclischen, gesättigten oder olefinisch ungesättigten, niedermolekularen Monoalkoholen mit zweckmäßigerweise 1 bis 6 Kohlenstoffatomen, derartige neue Polyisocyanatzusammensetzungen (b) und deren Verwendung zur Herstellung von vorzugsweise hochvernetzten Polyurethanen, insbesondere Polyurethan-Hartschaumstoffen.

Die Herstellung von kompakten oder zelligen Polyurethanen, im folgenden abgekürzt auch PU genannt, vorzugsweise von weichelastischen, halbharten oder harten Polyurethanschaumstoffen, durch Umsetzung von höhermolekularen Polyhydroxylverbindungen, vorzugsweise von Polyester- oder insbesondere Polyether-polyolen, und gegebenenfalls Kettenverlängerungs- und/oder Vernetzungsmitteln mit organischen oder/und modifizierten organischen Polyisocyanaten ist bekannt und wird in zahlreichen Patent- und Literaturveröffentlichungen beschrieben.

Beispielhaft genannt sei das Kunststoff-Handbuch, Band VII, Polyurethane, Carl Hanser Verlag München, Wien, 1. Auflage, 1966, herausgegeben von Dr. R. Vieweg und Dr. A. Höchtlen, und 2. Auflage 1983, herausgegeben von Dr. G. Oertel.

Die Herstellung von kompakten und zelligen Polyurethanen erfolgt üblicherweise nach dem Zweikomponenten-Verfahren. Hierbei wird eine sogenannte Komponente A, die die höhermolekularen Polyhydroxylverbindungen, gegebenenfalls Kettenverlängerungsmittel, Vernetzungsmittel, Treibmittel, Katalysatoren, Hilfsmittel und/oder Zusatzstoffe enthält und die sogenannte Komponente B, die üblicherweise aus organischen und/oder modifizierten organischen Polyisocyanaten besteht, intensiv vermischt und zur Reaktion gebracht. Obgleich das Zweikomponenten-Verfahren in der Technik in großem Maßstabe angewendet wird, weist es noch immer Mängel auf. Störend bemerkbar macht sich beispielsweise die mangelnde Verträglichkeit der Polyhydroxyl-Komponente (A) und der Polyisocyanat-Komponente (B), die insbesondere bei der Umsetzung von hochfunktionellen Polyether-polyolen auf der Grundlage von mindestens trifunktionellen Startermolekülen, wie z.B. Glycerin, Trimethylolpropan, Pentaerythrit, Sorbit und Sucrose mit Roh-MDI mit einer Funktionalität größer als 2,5 auftritt. Es bedarf daher längerer Rührzeiten bis durch die beginnende Urethanbildung eine Verträglichkeit der Ausgangskomponenten erreicht wird oder spezieller Mischtechniken, durch die die teilweise groben Dispersionen einer Ausgangskomponente in der anderen in feine Emulsionen übergeführt werden können. Die Polyurethanbildung erfolgt somit zu Beginn der Reaktion aus 2 heterogenen Phasen, bis nach einem gewissen Umsatz, vermutlich bedingt durch die als Lösungsvermittler wirksam werdenden Oligomeren, aus diesen feine Emulsionen und/oder echte Lösungen entstehen. Äußeres Kennzeichen dieser Phasenänderung ist z.B. der Übergang der gelbbraunen, trüben Dispersionen oder Emulsionen in eine dunkelbraune klare Lösung.

Es besteht somit eine enge Beziehung zwischen der Qualität der gebildeten, kompakten oder zelligen Polyurethane und den verwendeten Ausgangsstoffen, deren physikalischen und chemischen Eigenschaften, der angewandten Mischtechnik und der erhaltenen Reaktionsmischung, die z.B. als grobe Dispersion, feine Emulsion oder klare Lösung sowie in allen Zwischenstufen vorliegen kann.

Es hat daher nicht an Versuchen gefehlt, die mechanischen Eigenschaften der Polyurethane durch eine geeignete Auswahl der Ausgangsstoffe oder deren Modifizierung zu verbessern, um die vorstehend genannten Nachteile möglichst vollständig zu beseitigen.

Genannt seien beispielsweise Verfahren zur Verflüssigung von MDI-Isomerenmischungen oder Verfahren zur Verbesserung der Lagerstabilität bei tiefen Temperaturen von Roh-MDI, insbesondere von Roh-MDI mit einem relativ hohen Gehalt an MDI-Isomeren, durch partielle Umsetzung der Polyisocyanate mit mehrwertigen Alkoholen.

Nach Angaben der DE-C-16 18 380 (US-A-3 644 457) werden hierzu ein Mol 4,4'- und/oder 2,4'-MDI mit 0,1 bis 0,3 Mol Tri-1,2-oxypropylen-glykol und/oder Poly-1,2-oxypropylen-glykol mit einem Molekulargewicht bis 700 zur Reaktion gebracht.

Gemäß GB-A-1 369 334 wird die Modifizierung in zwei Reaktionsstufen durchgeführt und als Modifizierungsmittel Dipropylen-glykol oder Polyoxypropylen-glykol mit einem Molekulargewicht unter 2000 verwendet.

Die DE-A-29 13 126 (US-A-4 229 347) beschreibt MDI-Zusammensetzungen, in denen 10 bis 35 Gew.-% der Isocyanatgruppen mit einem Gemisch aus mindestens 3 Alkylenglykolen umgesetzt werden und wobei eines dieser Glykole Di-, Tri- oder ein höhermolekulares Polyoxypropylen-glykol ist.

In der DE-A-24 04 166 (GB-A-1 430 455) werden hingegen als Modifizierungsmittel Gemische aus einem Polyoxyethylen-glykol oder Polyoxyethylen-glykolgemisch mit einem durchschnittlichen Molekulargewicht kleiner als 650 und mindestens einem Alkylenglykol mit mindestens 3 C-Atomen genannt.

Die DE-A-23 46 996 (GB-A-1 377 679) betrifft MDI-Zusammensetzungen, bei denen 10 bis 35 Gew.-% der Isocyanatgruppen mit einem handelsüblichen Polyoxyethylen-glykol umgesetzt wurden.

Nach der EP-A-10 850 besteht eine Roh-MDI-Zusammensetzung aus einem mit Polyoxyalkylen-polyolen mit einer Funktionalität von 2 bis 3 auf Basis von Polyoxypropylen-polyol und gegebenenfalls Polyoxyethylen-polyol mit Molekulargewichten von 750 bis 3000 modifizierten MDI im Gemisch mit Roh-MDI.

Eine flüssige Roh-MDI-Zusammensetzung wird nach der DE-B-27 37 338 (US-A-4 055 548) durch Vereinigen von Roh-MDI mit einem Polyoxyethylen-glykol mit einem durchschnittlichen Molekulargewicht von 200 bis 600 erhalten.

Nach Angaben der DE-B-26 24 526 (GB-A-1 550 325) wird ein nach einem speziellen Verfahren hergestelltes Roh-MDI mit 88 bis 95 Gew.-% MDI mit Polyoxypropylen-glykol des Molekulargewichtsbereichs 134 bis 700 umgesetzt.

Die DE-A-25 13 796 (GB-A-1 444 192) und DE-A-25 13 793 (GB-A-1 450 660) betreffen Roh-MDI-Zusammensetzungen, bei denen das Roh-MDI mit Alkylen- oder Polyoxyalkylen-glykolen in bestimmten Mengen modifiziert wurde.

Die genannten Alkylen- oder Polyoxyalkylen-glykole bewirken zwar eine Verflüssigung der bei 42° bzw. 28°C schmelzenden 4,4'- bzw. 2,4'-MDI-Isomeren. Nachteilig ist jedoch, daß die Polyisocyanat-Zusammensetzungen bei Temperaturen um 10°C nach längeren Lagerzeiten kristalline Ausscheidungen zeigen.

Es ist ferner bekannt, PU-Weichschaumstoffe unter Verwendung von mit Urethangruppen modifizierten Roh-MDI-Zusammensetzungen als Polyisocyanatkomponente herzustellen.

Nach Angaben der EP-A-22 617 wird hierbei ein di- bis trifunktionelles Polyoxypropylen-polyoxyethylen-polyol mit einem Gehalt an polymerisierten Oxyethylengruppen von mindestens 50 Gew.-% mit einer Mischung aus MDI-Isomeren zur Reaktion gebracht und das erhaltene Quasiprepolymer anschließend mit Roh-MDI verdünnt. Nachteilig an den beschriebenen PU-Schaumstoffen ist insbesondere die geringe Zug- und Weiterreißfestigkeit.

Mit Urethangruppen modifizierte Polyisocyanatmischungen auf Basis von Roh-MDI mit einem Gehalt an NCO-Gruppen von 12 bis 30 Gew.-% werden auch in der EP-B-0 111 121 (US-A-4 478 960) beschrieben. Zur Modifizierung des MDI oder Roh-MDI wird ein Polyoxypropylenpolyoxyethylen-polyol mit einer Funktionalität von 2 bis 4, einer Hydroxylzahl von 10 bis 65 und einem Gehalt an polymerisierten Ethylenoxideinheiten von 5 bis 30 Gew.-% eingesetzt. Unter Verwendung dieser mit Urethangruppen modifizierten Polyisocyanatmischungen können PU-Schaumstoffe mit einer erhöhten Reißdehnung sowie verbesserten Zug- und Weiterreißfestigkeit hergestellt werden.

Der Modifizierung der MDI-Isomerenmischungen und höherfunktionellen Roh-MDI mit niedermolekularen Alkandiolen und/oder Oxyalkylen-glykolen und/oder höhermolekularen mindestens difunktionellen Polyoxyalkylen-polyolen sind allerdings enge Grenzen gesetzt, da auch bei einer nur teilweisen Umsetzung dieser Ausgangsstoffe die Funktionalität und dadurch auch die Viskosität der erhaltenen, mit Urethangruppen modifizierten Polyisocyanatzusammensetzungen sehr stark ansteigt. Derartige Roh-MDI-Zusammensetzungen sind aufgrund ihrer hohen Viskosität auf üblichen Dosier- und Schäumvorrichtungen nur schwer verarbeitbar.

Zur Verbesserung der Verträglichkeit der Polyhydroxyl-Komponente (A) und Polyisocyanat-Komponente (B) können nach Angaben der EP-A-0 320 134 Polyisocyanatzusammensetzungen mit einer Funktionalität von mindestens 2,3 verwendet werden, die bestehen, bezogen auf das Gesamtgewicht, aus 30 bis 45 Gew.-% MDI, 28 bis 67 Gew.-% Polyphenylpolymethylen-polyisocyanaten mit mehr als 2 Isocyanatgruppen und 3 bis 27 Gew.-% eines Prepolymeren, hergestellt aus MDI und einer Verbindung mit mindestens 2 mit Isocyanatgruppen reaktiven Resten und einem Molekulargewicht kleiner als 1000. Nachteilig an diesen MDI-Zusammensetzungen ist ihre zweistufige Herstellungsweise und infolge des Viskositätsanstiegs die nur in begrenzten Mengen verwendbaren Verbindungen mit mindestens 2 mit Isocyanatgruppen reaktiven Resten

Zur Vermeidung dieser Nachteile werden gemäß DE-A-39 28 330 (US-A-5 028 636) MDI oder Roh-MDI mit einem MDI-Gehalt von mindestens 30 Gew.-% zur Reaktion gebracht mit unterschüssigen Mengen mindestens eines Alkoxylierungsproduktes, die unter Verwendung von Monoalkoholen mit 8 bis 24 C-Atomen, primären Aminen oder organischen Carbonsäuren als Startermoleküle erhalten werden. Die EP-A-031 650 beschreibt die Modifizierung von MDI-Mischungen mit einem Gehalt von mindestens 15 Gew.-% 2,4'-MDI mit einem einwertigen Alkohol mit 9 bis 16 C-Atomen oder einem Polyoxyalkylenalkohol mit 1 bis 58 Alkylenoxidgruppen und einer Alkylendgruppe mit 1 bis 12 C-Atomen. Durch den Einbau der höhermolekularen Alkylreste oder Polyoxyalkylengruppen in das Roh-MDI oder MDI sollten die erhaltenen Addukte in

EP 0 657 482 A1

Form eines "inneren" Emulgators wirksam sein und die Mischbarkeit von Polyoxyalkylen-polyolen und Roh-MDI-Zusammensetzungen verbessern. Durch die genannten Maßnahmen konnte jedoch das prinzipielle Problem der Unverträglichkeit bzw. Nichtmischbarkeit von hochfunktionellen, hydrophilen Polyhydroxylverbindungen, insbesondere Polyoxyalkylen-polyolen, und hydrophoben Polyisocyanaten, insbesondere Roh-MDI nur unzulänglich gelöst werden.

Die Aufgabe der vorliegenden Erfindung bestand darin, die mechanischen Eigenschaften von kompakten und zelligen Polyurethanen, vorzugsweise von PU-Hartschaumstoffen, zu verbessern. Verbessert werden sollte hierzu durch technisch einfach durchführbare Maßnahmen die Mischbarkeit der Ausgangsstoffe, zweckmäßigerweise die Mischbarkeit der Polyhydroxylkomponente (A) und Polyisocyanatkomponente (B).

Überraschenderweise wurde gefunden, daß die Verträglichkeit von Polyisocyanatzusammensetzungen auf MDI-Basis mit Polyhydroxylverbindungen, vorzugsweise Polyether-polyolen, verbessert werden kann, so daß z.B. unmittelbar nach dem Mischen der Komponenten (A) und (B) echte Lösungen oder feine Emulsionen gebildet werden, durch eine Erhöhung des Gehalts an Urethangruppen in der Polyisocyanatzusammensetzung.

Gegenstand der Erfindung ist somit ein Verfahren zur Herstellung von kompakten oder vorzugsweise zelligen Polyurethanen, insbesondere Polyurethan-Hartschaumstoffen, durch Umsetzung von

a) höhermolekularen Polyhydroxylverbindungen mit mindestens zwei reaktiven Wasserstoffatomen mit
b) flüssigen, Urethangruppen gebunden enthaltenden Polyisocyanatzusammensetzungen auf Diphenylmethan-diisocyanatbasis

in Gegenwart oder Abwesenheit von

c) Kettenverlängerungs- und/oder Vernetzungsmitteln,
d) Treibmitteln,
e) Katalysatoren und
f) Hilfsmitteln,

das dadurch gekennzeichnet ist, daß man als Polyisocyanatzusammensetzungen (b) solche verwendet, die erhältlich sind durch Umsetzung von Mischungen aus Diphenylmethan-diisocyanaten und Polyphenyl-polymethylen-polyisocyanaten mit einer unterschüssigen Menge mindestens eines linearen, verzweigtkettigen oder cyclischen, gesättigten oder olefinisch ungesättigten, niedermolekularen Monoalkohols.

Gegenstände der Erfindung sind ferner die erfindungsgemäß verwendbaren flüssigen, Urethangruppen enthaltenden Polyisocyanatzusammensetzungen, erhältlich durch Umsetzung von Mischungen aus Diphenylmethan-diisocyanaten und Polyphenyl-polymethylen-polyisocyanaten mit einer unterschüssigen Menge mindestens eines linearen, verzweigtkettigen oder cyclischen, gesättigten oder olefinisch ungesättigten niedermolekularen Monoalkohols mit 1 bis 6 Kohlenstoffatomen nach Anspruch 6 und die Verwendung dieser flüssigen Urethangruppen enthaltenden Polyisocyanatzusammensetzungen zur Herstellung von insbesondere Polyurethan-Hartschaumstoffen nach Anspruch 10.

Durch die partielle Umsetzung von Roh-MDI mit den niedermolekularen, einwertigen Alkoholen kann der Urethangruppengehalt, der vorteilhafterweise gleich oder größer als 0,1 Mol/kg Polyisocyanatzusammensetzung ist, entsprechend den Erfordernissen, z.B. seiner Verträglichkeit in Abhängigkeit von der Art der Polyhydroxyl-Komponente (A), beliebig erhöht werden, ohne daß die Viskosität der Polyisocyanatzusammensetzung (b) über Gebühr ansteigt und dadurch ihre Verarbeitbarkeit erschwert oder gar unmöglich gemacht wird. Roh-MDI-Zusammensetzung mit einem Gehalt an Urethangruppen von z.B. 0,4 Mol/kg sind bei der Verwendung der erfindungsgemäß geeigneten einwertigen Alkohole zur Bildung der Urethangruppen niedrigviskos, dünnflüssig und ergeben beim Mischen mit der Polyhydroxyl-Komponente A vorzugsweise klare Lösungen, während Roh-MDI-Zusammensetzung mit gleichem Urethangruppengehalt, hergestellt unter Verwendung von zwei- und/oder dreiwertigen Alkoholen, aufgrund ihrer hohen Viskosität in üblichen Verschäumungsvorrichtungen nicht mehr verarbeitbar sind.

Durch die Reaktion des Roh-MDI mit den einwertigen Alkoholen wird die Funktionalität der Polyisocyanatzusammensetzung (b) vermindert, überraschenderweise werden durch diese Maßnahme die mechanischen Eigenschaften der hergestellten kompakten oder zelligen Polyurethane, insbesondere PU-Hartschaumstoffe, praktisch nicht negativ beeinflußt. Maßgebend hierfür dürfte sein, daß bereits zu Beginn des Mischvorgangs aus den erfindungsgemäß modifizierten Urethangruppen enthaltenden Roh-MDI-Zusammensetzungen und der Polyhydroxylkomponente (A), unabhängig von der Vermischungsgüte der Mischvorrichtung feine Emulsionen, die rasch in homogene Lösungen übergehen, oder direkt homogene Lösungen erhalten werden, die leicht reproduzierbare Polyurethane mit konstanter Qualität ergeben. Bei PU-Hartschaumstoffen konnten mit dem erfindungsgemäßen Verfahren nicht nur generell die mechanischen Eigenschaften, sondern insbesondere ihre Druckfestigkeit, verbessert werden.

Vorteilhaft ist ferner, daß die bei der PU-Hartschaumstoff-Herstellung auftretende maximale Reaktionstemperatur beträchtlich gesenkt werden kann, so daß Verfärbungen oder Verbrennungen des PU-Hart-

4

schaumstofffkerns verhindert werden.

Zu dem erfindungsgemäßen Verfahren zur Herstellung der kompakten oder vorzugsweise zelligen Polyurethane, insbesondere PU-Hartschaumstoffe, und den hierzu verwendbaren Ausgangsstoffen ist im einzelnen folgendes auszuführen:

a) Geeignete höhermolekulare Polyhydroxylverbindungen (a) besitzen üblicherweise eine Funktionalität von 2 bis 8 und ein Molekulargewicht von 400 bis 8000, wobei zur Herstellung von flexiblen Polyurethanen Polyhydroxylverbindungen mit einer Funktionalität von vorzugsweise 2 bis 3 und einem Molekulargewicht von vorzugsweise 2400 bis 7200 und insbesondere 3200 bis 6000 und zur Herstellung von harten Polyurethanen Polyhydroxylverbindungen mit einer Funktionalität von vorzugsweise 3 bis 8 und insbesondere 3 bis 6 und einem Molekulargewicht von vorzugsweise 400 bis 3600 und insbesondere 1200 bis 3200 zweckmäßigerweise Anwendung finden. Als Polyhydroxylverbindungen werden vorzugsweise lineare und/oder verzweigte Polyester-polyole und insbesondere Polyoxyalkylen-polyole verwendet. In Betracht kommen jedoch auch polymermodifizierte Polyoxyalkylen-polyole, Polyoxyalkylen-polyoldispersionen und andere hydroxylgruppenhaltige Polymere und Polykondensate mit den vorgenannten Funktionalitäten und Molekulargewichten, beispielsweise Polyesteramide, Polyacetale und/oder Polycarbonate, insbesondere solche, hergestellt aus Diphenylcarbonat und Hexandiol-1,6 durch Umesterung oder Mischungen aus mindestens zwei der genannten höhermolekularen Polyhydroxylverbindungen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Alkandiolen, mit 2 bis 12 Kohlenstoffatomen, vorzugsweise 2 bis 6 Kohlenstoffatomen und/oder Dialkylen-glykolen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Alkandiole, insbesondere Mischungen aus 1,4-Butandiol, 1,5-Pentandiol und 1,6-Hexandiol. Eingesetzt werden können ferner Polyester-polyole aus Lactonen, z.B. $\epsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole und/oder Alkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 4, insbesondere 2 bis 3 und ein Molekulargewicht von 800 bis 3600, vorzugsweise 1200 bis 3200 und insbesondere 1800 bis 2500.

Insbesondere als Polyhydroxylverbindungen verwendet werden jedoch Polyoxyalkylen-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 3 reaktive Wasserstoffatome gebunden enthält zur Herstellung von Polyoxyalkylen-polyolen für flexible Polyurethane und vorzugsweise 3 bis 8 reaktive Wasserstoffatome gebunden enthält zur Herstellung von Polyoxyalkylen-polyolen für halbharte und harte Polyurethane, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- bis achtwertige Alkohole und/oder Alkylenglykole wie z.B. Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Sucrose sowie Mischungen aus mindestens 2 mehrwertigen Alkoholen.

Die Polyoxyalkylen-polyole, vorzugsweise Polyoxypropylen- und Polyoxypropylen-polyoxyethylenpolyole, besitzen eine Funktionalität von 2 bis 8 und Molekulargewichte von 400 bis 8000, wobei, wie bereits dargelegt wurde, für flexible Polyurethane Polyoxyalkylen-polyole mit einer Funktionalität von 2 bis 3 und einem Molekulargewicht von 2400 bis 7200 und für harte Polyurethane Polyoxyalkylen-polyole mit einer Funktionalität von 3 bis 8 und einem Molekulargewicht von 400 bis 3600 bevorzugt verwendet werden, und geeignete Polyoxytetramethylen-glykole ein Molekulargewicht von 400 bis ungefähr 3500.

Als Polyoxyalkylen-polyole eignen sich ferner polymermodifizierte Polyoxyalkylen-polyole, vorzugsweise Pfropf-polyoxy-alkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyoxyalkylen-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.

Die Polyoxyalkylen-polyole können ebenso wie die Polyester-polyole einzeln oder in Form von Mischungen verwendet werden. Ferner können sie mit den Pfropf-polyoxyalkylen-polyolen oder Polyester-polyolen sowie den hydroxylgruppenhaltigen Polyesteramiden, Polyacetalen und/oder Polycarbonaten gemischt werden. Vorzüglich bewährt für flexible Polyurethane haben sich beispielsweise Mischungen mit einer Funktionalität von 2 bis 3 und einem Molekulargewicht von 2400 bis 8000, die enthalten mindestens ein Polyoxyalkylen-polyol und mindestens ein polymermodifiziertes Polyoxyalkylen-polyol aus der Gruppe der Pfropfpolyoxyalkylen-polyole oder Polyoxyalkylen-polyol-dispersionen, die als disperse Phase Polyharnstoffe, Polyhydrazide oder tertiäre Aminogruppen gebunden enthaltende Polyurethane enthalten.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie z.B. Propandiol-(1,3), Butan-diol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

b) Als organische Polyisocyanate werden erfindungsgemäß flüssige, Urethangruppen enthaltende Polyisocyanatzusammensetzungen auf Diphenylmethan-diisocyanatbasis (b) verwendet, die erhältlich sind durch Umsetzungen von Mischungen aus Diphenylmethan-diisocyanaten (MDI) und Polyphenyl-polymethylen-polyisocyanaten,üblicherweise Roh-MDI genannt, mit einer unterschüssigen Menge mindestens eines linearen, verzweigtkettigen oder cyclischen, gesättigten oder olefinisch ungesättigten, niedermolekularen Monoalkohols.

Geeignete Roh-MDI-Typen besitzen neben höheren Homologen vorteilhafterweise einen Gehalt an MDI-Isomeren von 30 bis 95 Gew.-%, vorzugsweise von 35 bis 80 Gew.-%, bezogen auf das Gesamtgewicht und NCO-Gehalte von ungefähr 30 bis 32 Gew.-%. Vorzüglich bewährt haben sich Roh-MDI, die enthalten oder vorzugsweise bestehen aus, bezogen auf das Gesamtgewicht:

$bI_1$) 29 bis 65 Gew.-%, vorzugsweise 33 bis 60 Gew.-% 4,4'-MDI,

$bI_2$) 1 bis 30 Gew.-%, vorzugsweise 2 bis 20 Gew.-% 2,4'-MDI,

$bI_3$) 0 bis 4 Gew.-%, vorzugsweise 0,5 bis 2,5 Gew.-% 2,2'-MDI und

$bI_4$) 70 bis 5 Gew.-%, vorzugsweise 65 bis 20 Gew.-% mindestens trifunktionellen Polyphenyl-polymethylen-polyisocyanaten.

Als erfindungsgemäß verwendbare, flüssige Urethangruppen enthaltende Polyisocyanatzusammensetzungen sind im Sinne der Erfindung auch Polyisocyanatzusammensetzungen zu verstehen, die erhalten werden durch Umsetzung von Mischungen aus MDI-Isomeren mit den niedermolekularen Monoalkoholen und anschließende Abmischung der erhaltenen Urethangruppen enthaltenden MDI-Mischungen mit dem vorgenannten Roh-MDI und/oder den erfindungsgemäß hergestellten Urethangruppen enthaltenden Roh-MDI-Zusammensetzungen oder durch Abmischung der erfindungsgemäß hergestellten Urethangruppen enthaltenden Roh-MDI-Zusammensetzung mit MDI-Mischungen und/oder Urethangruppen enthaltenden MDI-Mischungen.

Geeignete Mischungen aus MDI-Isomeren enthalten zweckmäßigerweise oder bestehen vorzugsweise, bezogen auf das Gesamtgewicht, aus

$bII_1$) 90 bis 48 Gew.-%, vorzugsweise 80 bis 60 Gew.-% 4,4'-MDI,

$bII_2$) 10 bis 48 Gew.-%, vorzugsweise 20 bis 40 Gew.-% 2,4'-MDI und

$bII_3$) 0 bis 4 Gew.-%, vorzugsweise 0 bis 2,5 Gew.-% 2,2'-MDI.

Zur Herstellung der erfindungsgemäß verwendbaren flüssigen, Urethangruppen gebunden enthaltenden Polyisocyanatzusammensetzungen auf Diphenylmethan-diisocyanatbasis (b) eignen sich niedermolekulare Monoalkohole, vorzugsweise solche mit 1 bis 6 C-Atomen, insbesondere mit 1 bis 3 C-Atomen aus der Gruppe der linearen oder verzweigtkettigen, gesättigten einwertigen Alkohole. Verwendbar sind ferner lineare oder verzweigtkettige, olefinisch ungesättigte einwertige Alkohole mit 3 bis 6 C-Atomen und gesättigte oder olefinisch ungesättigte, cyclische einwertige Alkohole mit 4 bis 6 C-Atomen, vorzugsweise 5 oder 6 C-Atomen. Im einzelnen seien beispielhaft genannt: lineare und verzweigtkettige, gesättigte Monoalkohole wie z.B. Methanol, Ethanol, n-Propanol, Isopropanol, n-Butanol, n-Pentanol und n-Hexanol sowie die entsprechenden Strukturisomeren einwertigen Alkohole, lineare und verzweigtkettige, olefinisch ungesättigte Monoalkohole wie z.B. Allylalkohol, 2-Methylpropen(2)-ol-1, Buten(2)- und Buten(3)-ol-1 und cyclische, gesättigte oder olefinisch ungesättigte Monoalkohole wie z.B. Cyclobutanol, Cyclopentanol, Cyclopentenol, Cyclohexanol und Cyclohexenol. Als Monoalkohole vorzüglich bewährt haben sich und daher vorzugsweise verwendet werden Methanol, Ethanol, n-Propanol, Isopropanol und Allylalkohol. Die niedermolekularen Monoalkohole können in technischer oder vorzugsweise reiner Form, einzeln oder als Mischungen aus mindestens zwei Monoalkoholen eingesetzt werden.

Wie bereits erwähnt ist die Verträglichkeit der Polyhydroxyl-Komponente (A) und Polyisocyanat-Komponente (B) abhängig von der Art der Polyhydroxyl-Komponente (A) und dem Gehalt an Urethangruppen in der Polyisocyanat-Komponente (B), der zweckmäßigerweise mindestens 0,1 Mol Urethangruppen, vorzugsweise 0,1 bis 2 Mol Urethangruppen und insbesondere 0,4 bis 1 Mol Urethangruppen pro kg Polyisocyanatzusammensetzung beträgt. Weist die Polyisocyanatzusammensetzung einen Urethangruppengehalt von 0,1 bis 0,3 Mol/kg auf, so bildet sich beim Mischen der Polyhydroxyl-Komponente (A) und Polyisocyanat-Komponente (B), je nach Art der Polyhydroxyl-Komponente (A) teilweise zunächst eine feine Emulsion, die sehr rasch in eine klare homogene Mischung übergeht, während Polyisocyanatzusammensetzungen mit einem Urethangruppengehalt von ungefähr 0,4 Mol/kg und höher üblicherweise unmittelbar beim Mischen klare Lösungen bilden. Die erfindungsgemäß, mit einwertigen Alkoholen modifizierten Urethangruppen enthaltenden Polyisocyanatzusammensetzungen besitzen im Bereich von 0,4 bis 1 Mol Urethangruppen/kg üblicherweise eine Viskosität, gemessen bei 23°C mit einem Haake Viskosimeter, von 1000 bis 3000 mPa•s und sind daher gut verarbeitbar, während analoge Polyisocyanatzusammensetzungen mit demselben Urethangruppengehalt/kg, modifiziert z.B. mit Dipropylenglykol, bereits fest sind.

Die erfindungsgemäßen Polyisocyanatzusammensetzungen mit einem Gehalt an Urethangruppen von 0,1 bis 2 Mol/kg besitzen üblicherweise einen Gehalt an NCO-Gruppen von 18 bis 30 Gew.-%, vorzugsweise von 24 bis 28 Gew.-%, bezogen auf das Gesamtgewicht.

Die neuen, Urethangruppen enthaltenden Roh-MDI-Zusammensetzungen können zur Herstellung beliebiger, vorzugsweise hochvernetzter Polyisocyanat-Polyadditionsprodukte verwendet werden. Besonders bewährt haben sie sich und daher vorzugsweise Anwendung finden sie zur Herstellung solcher Polyisocyanat-Polyadditionsprodukte, zu deren Herstellung höherfunktionelle Polyisocyanate, z.B. solche mit einer Funktionalität von mindestens 2,5, mit Polyhydroxylkomponenten (A), die Polyoxyalkylenpolyole mit einer Funktionalität von mindestens 3 und einer Hydroxylzahl von mindestens 250, vorzugsweise mindestens 350 enthalten, gemischt werden müssen. Polyisocyanat-Polyadditionsprodukte dieser Art sind insbesondere vernetzte PU-Elastomere und PU-Hart(form)schaumstoffe.

c) Die kompakten oder zelligen Polyurethane können nach dem erfindungsgemäßen Verfahren in Abwesenheit oder Gegenwart von Kettenverlängerungs- und Vernetzungsmitteln (c) hergestellt werden. Bei der Herstellung von flexiblen, kompakten oder zelligen Polyurethanen kann sich zur Modifizierung der mechanischen Eigenschaften, z.B. der Härte, der Zusatz von Kettenverlängerungsmitteln, Vernetzungsmitteln oder gegebenenfalls auch Gemischen davon als vorteilhaft erweisen. Bei der Herstellung von PU-Hartschaumstoffen kann üblicherweise auf die Verwendung von Kettenverlängerungs- und/oder Vernetzungsmittel (c) verzichtet werden. Als Kettenverlängerungsmittel können difunktionelle Verbindungen, als Vernetzungsmittel tri- und höherfunktionelle Verbindungen jeweils mit Molekulargewichten kleiner als 400, vorzugsweise von 62 bis ungefähr 300 verwendet werden. Als Kettenverlängerungsmittel beispielhaft genannt seien Alkandiole, z.B. solche, mit 2 bis 6 Kohlenstoffatomen im Alkylenrest, wie z.B. Ethan-, 1,3-Propan-, 1,4-Butan-, 1,5-Pentan- und 1,6-Hexandiol, und Dialkylenglykole, wie z.B. Diethylen-, Dipropylen- und Dibutylenglykol und als Vernetzungsmittel Alkanolamine, z.B. Ethanolamin, Dialkanolamin, z.B. Diethanolamin, und Trialkanolamine z.B. Triethanolamin und Triisopropanolamin, drei- und höherwertige Alkohole, wie z.B. Glycerin, Trimethylolpropan und Pentaerythrit und aliphatische und/oder aromatische Diamine, wie z.B. 1,2-Ethan-, 1,4-Butan-, 1,6-Hexandiamin, 2,3-, 2,4- und/oder 2,6-Toluylendiamin, 4,4'-Diamino-diphenylmethan, 3,5-Diethyl-toluylen-diamin-2,4 und/oder -2,6, 3,3'-Di- und/oder 3,3',5,5'-Tetraalkyl-3,3- diamino-diphenylmethane, wie z.B. Tetraisopropyl-4,4'-diamino-diphenylmethan. Als Kettenverlängerungs- oder Vernetzungsmittel eignen sich ferner die niedermolekularen Ethoxylierungs- und/oder Propoxylierungsprodukte, z.B. solche mit Molekulargewichten bis ungefähr 400, der vorgenannten mehrwertigen Alkohole, Alkylenglykole, Alkanolamine und Diamine.

Als Kettenverlängerungsmittel vorzugsweise eingesetzt werden Alkandiole, insbesonders Butandiol-1,4 und/oder Hexandiol-1,6, Alkylenglykole, insbesonders Ethylenglykol und Propylenglykol und als Vernetzungsmittel dreiwertige Alkohole, insbesonders Glycerin und Trimethylolpropan, Dialkanolamine, insbesonders Diethanolamin und Trialkanolamine, insbesonders Triethanolamin.

Die Kettenverlängerungs- und/oder Vernetzungsmittel, die vorzugsweise zur Herstellung von flexiblen, kompakten oder zelligen Polyurethanen mitverwendet werden, können beispielsweise in Mengen von 2 bis 60 Gew.-%, vorzugsweise von 10 bis 40 Gew.-%, bezogen auf das Gesamtgewicht der Aufbaukomponenten (a) und (c), eingesetzt werden.

d) Als Treibmittel (d) zur Herstellung der zelligen Polyurethane, vorzugsweise der PU-Hartschaumstoffe, findet insbesondere Wasser Verwendung, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 1 bis 5 Gew.-Teile und insbesondere 1,5 bis 3 Gew.-Teile, bezogen auf 100 Gew.-Teile der Polyhydroxylverbindungen (a).

Als Treibmittel geeignet sind ferner Flüssigkeiten, welche gegenüber den flüssigen, mit Urethangruppen modifizierten Polyisocyanatzusammensetzungen (b) inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen sowie Mischungen aus solchen physikalisch wirkenden Treibmitteln und Wasser. Beispiele derartiger, vorzugsweise verwendbarer Flüssigkeiten sind Alkane, wie z.B. Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, z.B. wie Furan, Dimethylether und Diethylether, Ketone, wie z.B. Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Als Treibmittel (d) verwendbar sind auch bei Raumtemperatur pulverförmige Verbindungen, die sich bei erhöhter Temperatur durch Abspaltung von Gasen, wie z.B. Wasserdampf, Kohlendioxid, Kohlenmonoxid, Sauerstoff oder Stickstoff, zersetzen. Beispielhaft genannt seien Silikagele, Bicarbonate, Ammoniumformiat, Oxalsäurederivate, Harnstoff und -derivate, Peroxide und vorzugsweise Azoverbindungen, wie z.B. Azoisobuttersäurenitril und Azodicarbonamid, Hydrazine, wie z.B. 4,4'-Oxy-bis(benzolsulfohydrazid) und Diphenylsulfon-3,3'-disulfohydrazid, Semicarbazide, wie z.B. p-Toluylensulfonylsemicarbazid, und Triazole wie z.B. 5-Morpholyl-1,2,3,4-thiatriazol.

Als Treibmittel vorzugsweise Verwendung finden Chlordifluormethan, Chlordifluorethane, Dichlorfluorethane, Pentangemische, Cyclopentan, Cyclohexan und insbesondere Wasser sowie Mischungen aus mindestens zwei dieser Treibmittel, z.B. Mischungen aus Wasser und Cyclopentan, Mischungen aus Chlordifluormethan und 1-Chlor-2,2-difluorethan und gegebenenfalls Wasser. Als Treibmittel nicht verwendet werden Fluorchlorkohlenwasserstoffe, die die Ozonschicht schädigen.

Die erforderliche Menge an physikalisch wirkenden Treibmitteln kann in Abhängigkeit von der gewünschten Schaumstoffdichte und der gegebenenfalls eingesetzten Wassermenge auf einfache Weise experimentell ermittelt werden und beträgt ungefähr 0 bis 25 Gew.-Teile, vorzugsweise 0 bis 15 Gew.-Teile pro 100 Gew. -Teile der Polyhydroxylverbindungen (a). Gegebenenfalls kann es zweckmäßig sein, die Urethangruppen gebunden enthaltenden Polyisocyanatzusammensetzung (b) mit dem inerten physikalisch wirkenden Treibmittel zu mischen und dadurch ihre Viskosität zu verringern.

e) Sofern die kompakten oder zelligen Polyurethane unter Mitverwendung von Katalysatoren hergestellt werden, werden hierzu vorzugsweise Verbindungen verwendet, die die Reaktion der Hydroxylgruppen enthaltenden Verbindungen der Aufbaukomponenten (a) und gegebenenfalls (c) mit den flüssigen, Urethangruppen gebunden enthaltenden Polyisocyanatzusammensetzungen auf MDI-Basis (b) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkyl-zinn-(IV)-salze von organischen Carbonsäuren, z.B. Dibutylzinndiacetat, Dibutylzinndilaurat, Dibutylzinn-maleat und Dioctylzinn-diacetat und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin-1,6, Di-(4-dimethylaminocyclohexyl)-methan, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat Natrium-, Kaliumethylat und Kaliumisopropylat sowie Alkalisalze von langkettigen Fettsäuren mit 10 bis 20 C-Atomen und gegebenenfalls seitenständigen OH-Gruppen und Kombinationen aus den organischen Metallverbindungen und stark basischen Aminen. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (a).

f) Der Reaktionsmischung zur Herstellung der kompakten und zelligen Polyurethane können gegebenenfalls auch noch Hilfsmittel (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (a), angewandt.

Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie z.B. silikatische Mineralien, beispielsweise Schichtsilikate, wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammfestmachen der erfindungsgemäß hergestellten kompakten oder zelligen Polyurethane verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew. -Teile der Komponenten (a) bis (c) zu verwenden.

Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der kompakten oder zelligen Polyurethane können die flüssigen, Urethangruppen gebunden enthaltenden Polyisocyanatzusammensetzungen (b), höhermolekularen Polyhydroxylverbindungen (a) und gegebenenfalls Kettenverlängerungs- und/oder Vernetzungsmittel (c) in Abwesenheit oder vorzugsweise Gegenwart von Katalysatoren (e) und Hilfsmitteln (f) sowie in Gegenwart von Treibmitteln (d) zur Bildung zelliger Polyurethane bei Temperaturen von 0 bis 100°C, vorzugsweise 15 bis 80°C in solchen Mengenverhältnissen zur Reaktion gebracht werden, daß pro NCO-Gruppe 0,5 bis 2, vorzugsweise 0,8 bis 1,3 und insbesondere ungefähr ein reaktive(s) Wasserstoffatom(e) gebunden an die Ausgangskomponenten (a) und gegebenenfalls (c) vorliegen und, sofern Wasser als Treibmittel verwendet wird, das Molverhältnis von Äquivalente Wasser zu Äquivalente NCO-Gruppe 0,5 bis 5 : 1, vorzugsweise 0,7 bis 0,95 : 1 und insbesondere 0,75 bis 0,85 : 1 beträgt.

Die kompakten und zelligen Polyurethane können nach dem Prepolymer- oder vorzugsweise nach dem one shot-Verfahren durch Vermischen von zwei Komponenten (A) und (B) hergestellt werden, wobei die Ausgangskomponenten (a) und gegebenenfalls (c), (d), (e) und (f) zu der sogenannten Polyhydroxyl-Komponente (A) vereinigt und als Polyisocyanat-Komponente (B) die Urethangruppen gebunden enthaltende Polyisocyanatzusammensetzung auf Diphenylmethan-diisocyanatbasis (b), gegebenenfalls im Gemisch mit (f) und inerten, physikalisch wirkenden Treibmitteln verwendet werden. Da die Polyol-Komponente (A) und Polyisocyanat-Komponente (B) sehr gut lagerstabil sind, müssen diese vor Herstellung der kompakten oder zelligen Polyurethane nur noch intensiv gemischt werden. Die Reaktionsmischung kann in offenen oder geschlossenen Formwerkzeugen bei Temperaturen von zweckmäßigerweise 15 bis 80°C zur Reaktion gebracht werden.

Zur Herstellung von zelligen Polyurethanen, wie z.B. flexiblen, halbharten oder vorzugsweise harten Polyurethanschaumstoffen, vorzugsweise PU-Formschaumstoffen, kann die schäumfähige Reaktionsmischung mit einer Temperatur von z.B. 15 bis 80°C, vorzugsweise 18 bis 45°C, in ein zweckmäßigerweise metallisches temperierbares, offenes oder geschlossenes Formwerkzeug eingebracht werden. Die Formwerkzeugtemperatur beträgt üblicherweise 20 bis 90°C, vorzugsweise 35 bis 70°C. Im geschlossenen Formwerkzeug läßt man die Reaktionsmischung üblicherweise unter Verdichtung, z.B. mit Verdichtungsgraden von 1,1 bis 8, vorzugsweise 2 bis 6 oder insbesondere 2,5 bis 4, aushärten. Das erfindungsgemäße Verfahren eignet sich auch zur Herstellung von Polyurethan-Blockschaumstoffen.

Die kompakten Polyurethane besitzen im allgemeinen Dichten von 1,0 bis 1,2 g/cm$^3$, wobei höherdichte Produkte unter Zusatz von Verstärkungsmitteln und/oder Füllstoffen erhalten werden. Zellige Elastomere und PU-Integralschaumstoffe besitzen üblicherweise Dichten von 240 g/l bis kleiner 1000 g/l, wobei Dichten von 400 g/l bis 600 g/l bevorzugt sind. Die flexiblen, halbharten und vorzugsweise harten PU-Schaumstoffe besitzen zweckmäßigerweise Dichten von 30 g/l bis 80 g/l, vorzugsweise von 35 g/l bis 60 g/l.

Die nach dem erfindungsgemäßen Verfahren hergestellten kompakten Polyurethane finden Verwendung z.B. in der Automobil-, Bau- und Möbelindustrie z.B. als Regenrinnen, Seitenleisten, Abdeckplatten, Tischkanten, die zelligen PU-Elastomeren z.B. als Dämpfungselemente, Sonnenblenden, Armlehnen, Innenschuh und Schuhsohlen und die PU-Schaumstoffe z.B. als Polstermaterialien, Sicherheitsabdeckungen, Möbelgehäuse, zum Ausschäumen von Kühlmöbelgehäusen, wie z.B. Kühltruhen und Kühlschränken, Heißwassergeräten, Fernwärmerohre und Hohlräumen anderer Art sowie zur Gesteinsverfestigung.

Beispiele

Herstellung der flüssigen, Urethangruppen enthaltenden Polyisocyanatzusammensetzungen

Beispiel 1

In einem Reaktionsgefäß, ausgestattet mit Rührer, Rückflußkühler und Zu- und Ableitungsvorrichtung für Gase, fügte man unter einer Stickstoffatmosphäre zu 4000 Gew.-Teilen Roh-MDI mit einem NCO-Gehalt von 31 Gew.-% und einem Gehalt an MDI-Isomeren von 40 Gew.-% unter Rühren 0,1 Gew.-Teile Benzoylchlorid, erwärmte die Reaktionsmischung auf 50°C und ließ bei dieser Temperatur in einem Zeitraum von 30 Minuten 211 Gew.-Teile Isopropanol zutropfen. Die Reaktionstemperatur erhöhte sich hierbei auf 70°C. Die Reaktionsmischung wurde danach auf 80°C erwärmt und bei dieser Temperatur die Reaktion in 2 Stunden zu Ende geführt.

Man erhielt eine klare, fließfähige Polyisocyanatzusammensetzung mit einem Gehalt an Urethangruppen von 0,84 Mol/kg, einem NCO-Gehalt von 25,9 Gew.-% und einer Viskosität bei 23°C von 2100 mPa•s, gemessen mit dem Haake Viskosimeter (vom Typ Rotovisko RV 20).

Durch Variation der Isopropanolmenge wurden in analoger Weise Urethangruppen enthaltende Polyisocyanatzusammensetzungen mit unterschiedlichen Konzentrationen an Urethangruppen hergestellt.

Die hierfür verwendeten Isopropanolmengen, die ermittelten Prozentgehalte an Urethan- und Isocyanatgruppen sowie die Viskosität der Polyisocyanatzusammensetzungen und ihre Mischbarkeit mit Trioxypropylenglykol sind in Tabelle 1 zusammengefaßt.

Beispiele 2 und 3

Man verfuhr analog den Angaben des Beispiels 1, verwendete jedoch anstelle von Isopropanol als einwertige Alkohole Methanol und Allylalkohol in den nachfolgend genannten Mengen.

Vergleichsbeispiel I

Man verfuhr analog den Angaben des Beispiels 1, verwendete jedoch anstelle von Isopropanol das difunktionelle Dipropylenglykol.

Mischbarbeit mit Polyoxyalkylen-polyolen

Zur Prüfung der Mischbarkeit wurden equimolare Mengen der Urethangruppen enthaltenden Roh-MDI-Zusammensetzungen und Trioxypropylenglykol (TPG) bei 23°C gemischt.

Als Prüfungssubstanz wurde für Polyoxyalkylen-polyole stellvertretend Trioxypropylenglykol verwendet, da diese Verbindung eine Hartschaumpolyoxyalkylen-polyolen ähnliche Hydroxylzahl besitzt, jedoch niedrigviskos und daher für derartige Mischungsversuche besser geeignet ist, als z.B die hochviskosen Polyoxyalkylen-polyole auf Sucrosebasis.

Tabelle 1

Physikalische Eigenschaften der Urethangruppen enthaltenden Polyisocyanatzusammensetzungen

| Beisp. | Alkohol Art | Menge [Gew.-Teile] | Urethangrup- pengehalt [Mol/kg] | NCO-Gehalt [Gew.-%] | Viskosität [mPa·s] | Mischbarkeit mit TPG [equimolar] |
|---|---|---|---|---|---|---|
| 1 | Isopropanol | 120 | 0,49 | 28,1 | 1000 | feine Emulsion |
| | " | 140 | 0,56 | 27,6 | 1400 | " " |
| | " | 160 | 0,64 | 27,1 | 1610 | klar mischbar |
| | " | 200 | 0,79 | 26,0 | 1990 | " " |
| | " | 211 | 0,84 | 25,9 | 2100 | " " |
| | " | 240 | 0,94 | 25,3 | 3120 | " " |
| | " | 360 | 1,38 | 22,7 | 4800 | " " |
| 2 | Methanol | 80 | 0,61 | 27,8 | 1320 | feine Emulsion |
| | " | 100 | 0,76 | 27,0 | 1980 | klar mischbar |
| | " | 120 | 0,91 | 26,3 | 3000 | " " |
| | " | 160 | 1,20 | 24,8 | 4830 | " " |
| 3 | Allylalkohol | 132 | 0,55 | 27,7 | 1350 | klar mischbar |
| | | | | | | |
| Vgl- bsp. I | Dipropylen- glykol | 60 | 0,22 | 30,0 | 3050 | nicht mischbar |
| | " | 80 | 0,29 | 29,7 | 6800 | " " |
| | " | 100 | 0,36 | 29,4 | 18640 | " " |

Herstellung von zelligen Polyurethanen

Beispiel 4

PU-Hartschaumstoff

Polyhydroxylkomponente (A) : Mischung, bestehend aus
93 Gew.-Teilen Trioxypropylenglykol (Hydroxylzahl 584),
2,4 Gew.-Teilen Polysiloxan-Schaumstabilisator (Tegostab®B8406 der Goldschmidt AG,),
1,9 Gew.-Teilen Dimethylcyclohexylamin und
2,7 Gew.-Teilen Wasser.

Polyisocyanatkomponente (B):

Urethangruppenhaltige Roh-MDI-Zusammensetzung mit einem Urethangruppengehalt von 0,79 Mol/kg, einem NCO-Gehalt von 26 Gew.-% und einer Viskosität bei 23°C von 1990 mPas, gemessen mit dem Haake Viskosimeter, Typ Rotovisko RV 20, hergestellt analog den Angaben des Beispiels 1 durch Umsetzung von 200 Gew.-Teilen Isopropanol mit 4000 Gew.-Teilen des in Beispiel 1 beschriebenen Roh-MDI's.

Zur Herstellung des PU-Hartschaumstoffs wurden 100 Gew.-Teile der Polyhydroxylkomponente (A) und 229 Gew.-Teile der Polyisocyanatkomponente (B) bei 23°C intensiv gemischt, die klare Reaktionsmischung wurde in einen Plastikeimer eingefüllt und dort aufschäumen gelassen.

Vergleichsbeispiel II

Polyhydroxylkomponente (A): analog Beispiel 4

Polyisocyanatkomponente (B): Roh-MDI mit einem NCO-Gehalt von 31 Gew.-% und einem Gehalt an MDI-Isomeren von 40 Gew.-%.
100 Gew.-Teile der Polyhydroxylkomponente (A) und 188 Gew.-Teile der Polyisocyanatkomponente (B) wurden analog Beispiel 4 gemischt und aufschäumen gelassen.

Tabelle 2

| Mechanische Eigenschaften der PU-Hartschaumstoffe, hergestellt nach Beispiel 4 und Vergleichsbeispiel II | | |
|---|---|---|
| mechanische Eigenschaften | Bsp. 4 | Vgl.-bsp. II |
| Dichte [g/l] | 52,5 | 47,1 |
| Wärmeleitfähigkeit, gemessen mit einem Hesto-Lambda-Control A 50-A [mW/mK] | 20,1 | 21,5 |
| Geschlossenzelligkeit, gemessen mit einem Beckmann Luftvergleichspyknometer, Modell 930 [%] | 87 | 88 |
| Druckfestigkeit nach DIN 53421 [kPa] | 494 | 306 |
| maximale Reaktionstemperatur im Schaumstoffkern, gemessen mit einem 0,2 mm dicken Cr-Ni-Thermoelement [°C] | 181 | 206 |

Beispiel 5

PU-Hartschaumstoff

Polyhydroxylkomponente (A): Mischung bestehend aus
81,6 Gew.-Teilen eines mit Glycerin gestarteten Polyoxypropylenpolyols mit der Hydroxylzahl 400,
9,9 Gew.-Teilen Trioxypropylenglykol,

13

2,5 Gew.-Teilen Polysiloxanschaumstabilisator (Polyurax® SR 321 der Union Carbide Comp.),
2,0 Gew.-Teilen Dimethylcyclohexylamin und
3,0 Gew.-Teilen Wasser.

Polyisocyanatkomponente (B): analog Beispiel 4

Zur Herstellung des PU-Hartschaumstoffs wurden 100 Gew.-Teile der Polyhydroxylkomponente (A) und 179 Gew.-Teile der Polyisocyanatkomponente (B) analog Beispiel 4 gemischt und frei aufschäumen gelassen.

Vergleichsbeispiel III

Polyhydroxylkomponente (A): analog Beispiel 5

Polyisocyanatkomponente (B): analog Vergleichsbeispiel II

100 Gew.-Teile der Polyhydroxylkomponente (A) und 152 Gew.-Teile der Polyisocyanatkomponente (B) wurden analog Beispiel 4 gemischt und aufschäumen gelassen.

Tabelle 3

| Mechanische Eigenschaften der PU-Hartschaumstoffe, hergestellt nach Beispiel 5 und Vergleichsbeispiel III | | |
|---|---|---|
| mechanische Eigenschaften | Bsp. 5 | Vgl.-bsp. III |
| Dichte [g/l] | 44,6 | 40,8 |
| Wärmeleitfähigkeit, gemessen mit einem Hesto-Lambda-Control A 50-A [mW/mK] | 20,9 | 22,1 |
| Geschlossenzelligkeit, gemessen mit einem Beckmann Luftvergleichspyknometer, Modell 930 [%] | 89 | 89 |
| Druckfestigkeit nach DIN 53 421 [kPa] | 368 | 287 |

Beispiel 6

Kompakte PU-Formmasse
100 Gew.-Teile eines Polyoxypropylen-glykols mit einer Hydroxylzahl von 105, hergestellt durch Polyaddition von 1,2-Propylenoxid an 1,2-Propandiol
wurde 2 Stunden lang bei 100°C unter vermindertem Druck (ca. 10 mbar) getrocknet und danach mit
0,1 Gew.-Teile Dibutylzinndilaurat
versetzt.
Hierzu fügte man unter intensivem Rühren mit einem Propellerrührer bei 23°C
33 Gew.-Teile der in Beispiel 1 beschriebenen fließfähigen Polyisocyanatzusammensetzung auf Roh-MDI-Isopropanol-Basis mit einem NCO-Gehalt von 25,9 Gew.-%.
Die Reaktionsmischung wurde in ein auf 50°C temperiertes metallisches Formwerkzeug mit den inneren Abmessungen 20x10x0,5 cm eingebracht, dort ausreagieren gelassen und das gebildete PU-Elastomere nach einer Stunde entformt.
Man erhielt eine klare blasenfreie, dunkelbraune PU-Platte, an der folgende mechanische Eigenschaften gemessen wurden

| | |
|---|---|
| Reißfestigkeit [N/mm²]: | 0,92 |
| Reißdehnung [%]: | 102 |

Vergleichsbeispiel IV

Man verfuhr analog den Angaben des Beispiels 6, verwendete jedoch anstelle der fließfähigen Polyisocyanatzusammensetzung auf Roh-MDI-Isopropanol-Basis das unmodifizierte Roh-MDI mit einem NCO-Gehalt von 31 Gew.-%.

Man erhielt eine inhomogene, von zahlreichen Gasblasen durchsetzte, gelbbraune PU-Platte, an der folgende mechanische Eigenschaften gemessen wurden:

| | |
|---|---|
| Reißfestigkeit [N/mm$^2$]: | 0,26 |
| Reißdehnung [%]: | 44 |

**Patentansprüche**

1. Verfahren zur Herstellung von kompakten oder zelligen Polyurethanen durch Umsetzung von
   a) höhermolekularen Polyhydroxylverbindungen mit mindestens zwei reaktiven Wasserstoffatomen mit
   b) flüssigen, Urethangruppen gebunden enthaltenden Polyisocyanatzusammensetzungen auf Diphenylmethan-diisocyanatbasis
   in Gegenwart oder Abwesenheit von
   c) Kettenverlängerungs- und/oder Vernetzungsmitteln,
   d) Treibmitteln,
   e) Katalysatoren und
   f) Hilfsmitteln,
   dadurch gekennzeichnet, daß man als Polyisocyanatzusammensetzungen (b) solche verwendet, die erhältlich sind durch Umsetzung von Mischungen aus Diphenylmethan-diisocyanaten und Polyphenyl-polymethylen-polyisocyanaten mit einer unterschüssigen Menge mindestens eines linearen, verzweigtkettigen oder cyclischen, gesättigten oder olefinisch ungesättigten, niedermolekularen Monoalkohols.

2. Verfahren nach Anspruch 1, dadurch gekennzeichnet, daß die höhermolekularen Polyhydroxylverbindungen (a) eine Funktionalität von 2 bis 8 und ein Molekulargewicht von 400 bis 8000 und die Kettenverlängerungs- und/oder Vernetzungsmittel (c) eine Funktionalität von 2 bis 5 und ein Molekulargewicht kleiner als 400 besitzen.

3. Verfahren nach Anspruch 1, dadurch gekennzeichnet, daß die zur Herstellung der Polyisocyanatzusammensetzungen (b) verwendbare Mischung aus Diphenylmethan-diisocyanaten und Polyphenyl-polymethylen-polyisocyanaten einen Diphenylmethan-diisocyanat-Isomerengehalt von 30 bis 95 Gew.-% besitzen.

4. Verfahren nach Anspruch 1, dadurch gekennzeichnet, daß die zur Herstellung der Polyisocyanatzusammensetzungen (b) verwendbaren niedermolekularen Alkohole 1 bis 6 Kohlenstoffatome besitzen.

5. Verfahren nach Anspruch 1, dadurch gekennzeichnet, daß ein kg Polyisocyanatzusammensetzung 0,1 bis 2 Mole Urethangruppen enthält.

6. Flüssige, Urethangruppen enthaltende Polyisocyanatzusammensetzungen, erhältlich durch Umsetzung von Mischungen aus Diphenylmethan-diisocyanaten und Polyphenyl-polymethylen-polyisocyanaten mit einer unterschüssigen Menge mindestens eines linearen, verzweigtkettigen oder cyclischen, gesättigten oder olefinisch ungesättigten Monoalkohols mit 1 bis 6 Kohlenstoffatomen.

7. Flüssige, Urethangruppen enthaltende Polyisocyanatzusammensetzungen nach Anspruch 6, dadurch gekennzeichnet, daß zu ihrer Herstellung eine Mischung aus Diphenylmethan-diisocyanaten und Polyphenyl-polymethylen-polyisocyanaten mit einem Gehalt an Diphenylmethan-diisocyanat-Isomeren von 30 bis 95 Gew.-% verwendet wird.

8. Flüssige, Urethangruppen enthaltende Polyisocyanatzusammensetzungen nach Anspruch 6, dadurch gekennzeichnet, daß diese pro kg 0,1 bis 2 Mole Urethangruppen enthalten.

9. Flüssige, Urethangruppen enthaltende Polyisocyanatzusammensetzungen nach Anspruch 6, dadurch gekennzeichnet, daß als Monoalkohole Methanol, Ethanol, n-Propanol, Isopropanol und/oder Allylalkohol verwendet werden.

10. Verwendung der flüssigen, Urethangruppen enthaltenden Polyisocyanatzusammensetzungennach Anspruch 6 zur Herstellung von Polyurethan-Hartschaumstoffen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 030 039 (MITSUI TOATSU CHEMICALS) * Seite 2, Zeile 30 - Seite 8, Zeile 4; Ansprüche 1-7; Beispiel 1 * --- | 1 | C08G18/28 C08G18/76 |
| X | GB-A-2 066 813 (ICI) * Seite 1, Zeile 40 - Seite 2, Zeile 44; Anspruch 1 * --- | 1 | |
| X | EP-A-0 547 515 (TAKEDA) * Seite 3, Zeile 14 - Zeile 32; Anspruch 1 * --- | 1 | |
| A | US-A-4 334 052 (PATTON ET AL) * Spalte 2, Zeile 43 - Spalte 4, Zeile 65; Ansprüche 1-3; Beispiel 7 * ----- | 1 | |
| | | | **RECHERCHIERTE SACHGEBIETE (Int.Cl.6)** C08G |

Der vorliegende Recherchenbericht wurde für alle Patentansprüche erstellt

| Recherchenort | Abschlußdatum der Recherche | Prüfer |
|---|---|---|
| DEN HAAG | 24. Februar 1995 | Bourgonje, A |

EPO FORM 1503 03.82 (P04C03)